**Europäisches Patentamt**

(19) **European Patent Office**

**Office européen des brevets**

(11) Veröffentlichungsnummer: **0 027 607**
**B1**

(12) # EUROPÄISCHE PATENTSCHRIFT

(45) Veröffentlichungstag der Patentschrift:
13.04.83

(51) Int. Cl.³: **C 01 B 25/235**, C 01 B 17/90,
C 01 B 7/19

(21) Anmeldenummer: **80106155.7**

(22) Anmeldetag: **10.10.80**

(54) Verfahren zur Herstellung einer gereinigten oxidationsbeständigen anorganischen Säure.

(30) Priorität: **20.10.79 DE 2942545**

(43) Veröffentlichungstag der Anmeldung:
**29.04.81 Patentblatt 81/17**

(45) Bekanntmachung des Hinweises auf die Patenterteilung:
**13.04.83 Patentblatt 83/15**

(84) Benannte Vertragsstaaten:
**BE DE FR GB IT NL**

(56) Entgegenhaltungen:
**EP-A-0 016 996**
**BE-A-557 062**
**DE-A-2 700 450**
**DE-B-2 704 075**
**DE-C-693 370**
**DE-C-884 358**
**DE-C-2 616 768**

(73) Patentinhaber: **RIEDEL-DE HAEN AKTIENGESELLSCHAFT, Wunstorfer Strasse 40, D-3016 Seelze 1 (DE)**

(72) Erfinder: **Hirschberg, Rudolf, Dr., Schillerstrasse 13, D-3052 Bad Nenndorf (DE)**
Erfinder: **Schönfeld, Bernd, Dr., Pappelweg 6, D-3052 Bad Nenndorf (DE)**

(74) Vertreter: **Reuter, Johann-Heinrich, Dr. et al, HOECHST AKTIENGESELLSCHAFT Zentrale Patentabteilung Postfach 80 03 20, D-6230 Frankfurt/Main 80 (DE)**

BUNDESDRUCKEREI BERLIN

# 0 027 607

## Verfahren zur Herstellung einer gereinigten oxidationsbeständigen anorganischen Säure

Die Erfindung bezieht sich auf ein Verfahren zur Herstellung einer gereinigten oxidationsbeständigen anorganischen Säure durch Oxidation der darin enthaltenden organischen Verunreinigungen.

Es ist bereits bekannt, daß Abfallschwefelsäure, die organische Verunreinigungen enthält, mit Hilfe von Nitrosylschwefelsäure und einem Oxidationsmittel regeneriert werden kann (vgl. deutsche Patentschrift DE-C-2 616 768). Dabei wird als Oxidationsmittel Salpetersäure, Perchlorsäure, Carosche Säure oder Wasserstoffperoxid verwendet. Ferner ist bekannt, daß die Entfernung organischer Verunreinigungen aus Phosphorsäure mit Hilfe von Chloraten und Salzsäure möglich ist (vgl. deutsche Auslegeschrift DE-B-2 704 075). Hierzu wird eine Phosphorsäure benötigt, die durch Extraktion mit einem organischen Lösungsmittel vorgereinigt wurde; die Reinigung wird bei einer Temperatur von über 100° C durchgeführt. Falls die extrahierte Phosphorsäure eine kleine Menge Chrom-, Vanadin- oder Eisenionen enthält, färbt sie sich gelb und muß zusätzlich noch mit einem Reduktionsmittel behandelt werden. Weiterhin ist ein Oxidationsmittel bekannt, das aus einer wäßrigen Lösung eines Peroxids besteht, die mindestens 0,3 g/l Divanadinpentoxid gelöst enthält und zur Oxidation organischer Verbindungen angewendet wird (vgl. deutsche Offenlegungsschrift DE-A-2 700 450). Dabei soll das Vanadinpentoxid in möglichst hoher Konzentration gelöst vorliegen. Diese Oxidationslösung dient insbesondere zur Eliminierung stark riechender Verbindungen bei der Fabrikation von Zellstoff. Die Reinigung und Entfärbung von Phosphorsäure mit Hilfe von konzentrierter Wasserstoffperoxidlösung ist ebenfalls beschrieben (vgl. deutsche Patentschrift DE-C-884 358). Die danach erhaltene Säure ist weitgehend frei von organischen und anorganischen Verunreinigungen.

Aufgabe der Erfindung ist nun eine einfach durchzuführende Reinigung von oxidationsbeständigen anorganischen Säuren, wobei die organischen Verunreinigungen mit Hilfe sehr geringer Mengen an Oxidationsmittel in wirtschaftlicher Weise aus den Säuren entfernt werden.

Die Erfindung betrifft ein Verfahren zur Herstellung einer gereinigten oxidationsbeständigen anorganischen Säure durch Oxidation der darin enthaltenen organischen Verunreinigungen mit Hilfe eines anorganischen Oxidationsmittels und ist dadurch gekennzeichnet, daß die Oxidation mit Hilfe von Wasserstoffperoxid in Gegenwart einer wasserlöslichen Vanadin-Verbindung oder Chrom-Verbindung in einer Menge von 0,1 bis 100 ppm (parts per million bezogen auf die Säuremenge) durchgeführt wird.

Das erfindungsgemäße Verfahren ist anwendbar auf alle oxidationsbeständigen anorganischen Säuren, insbesondere Phosphorsäure, Schwefelsäure und Flußsäure. Die Konzentration der zu reinigenden Säure soll mindestens 50 Gewichtsprozent, vorzugsweise 60 bis 95 Gewichtsprozent, betragen.

Als Oxidationsmittel wird erfindungsgemäß Wasserstoffperoxid eingesetzt, und zwar üblicherweise in Form einer wäßrigen Lösung. Die $H_2O_2$-Konzentration der Lösung beträgt mindestens 3 Gewichtsprozent, vorzugsweise 30 bis 40 Gewichtsprozent.

Eine vorteilhafte Ausgestaltung des erfindungsgemäßen Verfahrens besteht darin, daß das Oxidationsmittel der Säure portionsweise in kleinen Anteilen zugefügt wird; dadurch wird eine gleichmäßige, relativ niedrige Oxidationsmittel-Konzentration in der zu reinigenden Säure aufrechterhalten und die unvermeidliche katalytische Zersetzung des Wasserstoffperoxids in Wasser und Sauerstoff vermindert. Auf diese Art erreicht man schneller eine vollständige Oxidation der Verunreinigungen bei geringerem Verbrauch an Oxidationsmittel, und eine unerwünschte stärkere Verdünnung der Säure wird vermieden. Überschüssiges Wasserstoffperoxid wird im übrigen ohnehin zersetzt, so daß bei der Weiterverwendung der gereinigten Säure nicht mit Korrosionsproblemen zu rechnen ist.

Wesentliches Merkmal des erfindungsgemäßen Verfahrens ist seine Durchführung in Gegenwart einer katalytisch wirksamen Menge einer wasserlöslichen Vanadin-Verbindung oder Chrom-Verbindung. Die Menge des Katalysators beträgt 0,1 bis 100 ppm und insbesondere 1 bis 10 ppm (bezogen auf die Säuremenge). Der Katalysator wird in Form einer wäßrigen Lösung eingesetzt; seine Konzentration beträgt dabei $10^{-3}$ bis 1 Gewichtsprozent, vorzugsweise 0,1 bis 0,5 Gewichtsprozent. Geeignete Katalysatoren sind vor allem Vanadin(V)-oxid und Chrom(VI)-oxid. Ferner eignen sich wasserlösliche Salze von Vanadinsäuren, vorzugsweise Alkalisalze der Metavanadinsäure, z. B. Natriummetavanadat und Kaliummetavanadat, sowie wasserlösliche Salze von Chromsäuren, vorzugsweise Alkalisalze der Chrom- oder Dichromsäure, z. B. Natriumchromat, Natriumdichromat, Kaliumchromat und Kaliumdichromat. Ebenfalls anwendbar sind wasserlösliche Halogenide von Vanadinsäuren oder Chromsäuren, z. B. Vanadylchlorid und Chromylchlorid.

Das erfindungsgemäße Oxidationsverfahren wird üblicherweise bei einer Temperatur von 20 bis 120° C, vorzugsweise 40 bis 80° C, durchgeführt. Die Behandlungszeit beträgt — je nach Art und Konzentration der zu reinigenden Säure und nach Art und Menge des Katalysators — im allgemeinen 0,5 bis 12 Stunden, vorzugsweise 6 bis 8 Stunden.

Die Erfindung wird durch die nachstehenden Beispiele näher erläutert. Prozentangaben beziehen sich dabei jeweils auf das Gewicht. Der Gehalt an organischen Verunreinigungen in der jeweiligen

2

Säure wird durch Messung der optischen Durchlässigkeit mit einem handelsüblichen Spektrofotometer bestimmt; die Messungen werden mit Licht der Wellenlänge 365 µm in 1-cm-Küvetten durchgeführt.

### Beispiel 1 und 2 und Vergleichsbeispiel A

Jeweils 75 g einer Phosphorsäure, die nach dem Naßaufschlußverfahren hergestellt worden ist, einen Gehalt von 60% $P_2O_5$ aufweist und aufgrund organischer Verunreinigungen eine optische Durchlässigkeit von 50% zeigt, werden auf eine Temperatur von 80°C erwärmt. Die Proben der Beispiele 1 und 2 werden mit Vanadin(V)-oxid versetzt. Zu jeder Probe wird — unter Einhaltung der Temperatur von 80°C — im Abstand von jeweils 30 min 0,1 ml 35prozentiger wäßriger Wasserstoffperoxidlösung gegeben. Nach 6 Stunden wird dann die optische Durchlässigkeit ermittelt. Die Ergebnisse sind in Tabelle 1 zusammengefaßt.

Tabelle 1

|  | Beispiel | | |
|---|---|---|---|
|  | 1 | 2 | A |
| $V_2O_5$-Menge (ppm) | 1 | 0,1 | — |
| Optische Durchlässigkeit (%) | 99 | 99 | 78 |

### Beispiele 3 bis 5 und Vergleichsbeispiel B

Jeweils 75 g einer Schwefelsäure, die einen Gehalt von 80% $H_2SO_4$ aufweist und mit Huminsäuren (Torfextrakt) auf eine optische Durchlässigkeit von 50% eingefärbt ist, werden auf eine Temperatur von 40°C erwärmt. Die Proben der Beispiele 3 bis 5 werden mit Vanadin(V)-oxid versetzt. Zu jeder Probe wird — unter Einhaltung der Temperatur von 40°C — im Abstand von jeweils 5 min 0,1 ml 35prozentiger wäßriger Wasserstoffperoxidlösung gegeben. Nach 25 min wird dann die optische Durchlässigkeit ermittelt. Die Ergebnisse sind in Tabelle 2 zusammengefaßt.

Tabelle 2

|  | Beispiel | | | |
|---|---|---|---|---|
|  | 3 | 4 | 5 | B |
| $V_2O_5$-Menge (ppm) | 10 | 1 | 0,1 | — |
| Optische Durchlässigkeit (%) | 100 | 98 | 88 | 75 |

### Beispiele 6 bis 8 und Vergleichsbeispiel C

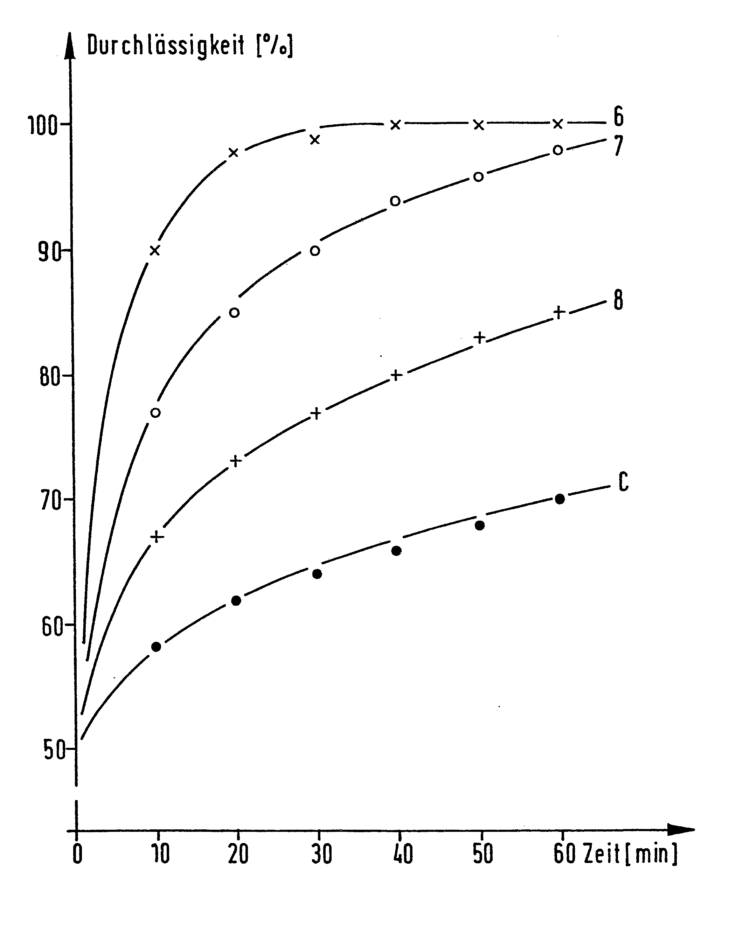

Jeweils 75 g einer 60prozentigen Phosphorsäure, die mit Huminsäuren (Torfextrakt) auf eine optische Durchlässigkeit von 50% eingefärbt ist, werden auf eine Temperatur von 80°C erwärmt. Die Proben der Beispiele 6 bis 8 werden mit Vanadin(V)-oxid versetzt. Zu jeder Probe wird — unter Einhaltung der Temperatur von 80°C — im Abstand von jeweils 10 min 0,1 ml 35prozentiger wäßriger Wasserstoffperoxidlösung gegeben. Sofort nach jeder Peroxid-Zugabe wird die optische Durchlässigkeit ermittelt. Die Ergebnisse sind in Tabelle 3 zusammengefaßt und in Figur 1 graphisch dargestellt. (Die Kurven 6, 7, 8 und C beziehen sich auf die Beispiele 6, 7, 8 und Vergleichsbeispiel C.)

Tabelle 3

| | Beispiel | | | |
|---|---|---|---|---|
| | 6 | 7 | 8 | C |
| $V_2O_5$-Menge (ppm) | 10 | 1 | 0,1 | — |
| Optische Durchlässigkeit (%) | | | | |
| nach 10 min | 90 | 77 | 67 | 58 |
| nach 20 min | 98 | 85 | 73 | 62 |
| nach 30 min | 99 | 90 | 77 | 64 |
| nach 40 min | 100 | 94 | 80 | 66 |
| nach 50 min | 100 | 96 | 83 | 68 |
| nach 60 min | 100 | 98 | 85 | 70 |

### Beispiele 9 bis 11 und Vergleichsbeispiel D

3 Proben von jeweils 75 g einer 50prozentigen Flußsäure, die mit Huminsäuren (Torfextrakt) auf eine optische Durchlässigkeit von 50% eingefärbt ist, werden bei einer Temperatur von 20°C mit Vanadin(V)-oxid versetzt; eine Vergleichsprobe bleibt ohne diesen Zusatz. Zu jeder Probe wird — unter Einhaltung der Temperatur von 20°C — im Abstand von jeweils 1 Stunde 0,1 ml 35prozentiger wäßriger Wasserstoffperoxidlösung gegeben. Nach 12 Stunden wird die optische Durchlässigkeit ermittelt. Die Ergebnisse sind in Tabelle 4 zusammengefaßt.

Tabelle 4

| | Beispiel | | | |
|---|---|---|---|---|
| | 9 | 10 | 11 | D |
| $V_2O_5$-Menge (ppm) | 10 | 1 | 0,1 | — |
| Optische Durchlässigkeit (%) | 100 | 100 | 88 | 75 |

### Beispiele 12 und 13 und Vergleichsbeispiel E

Jeweils 75 g einer 80prozentigen Schwefelsäure, die mit Huminsäuren (Torfextrakt) auf eine optische Durchlässigkeit von 50% eingefärbt ist, werden auf eine Temperatur von 40°C erwärmt. Die Proben der Beispiele 12 und 13 werden mit Chrom(VI)-oxid versetzt. Zu jeder Probe wird — unter Einhaltung der Temperatur von 40°C — im Abstand von jeweils 5 min 0,1 ml 35prozentiger Wasserstoffperoxidlösung gegeben. Nach 30 min wird dann die optische Durchlässigkeit ermittelt. Die Ergebnisse sind in Tabelle 5 zusammengefaßt.

Tabelle 5

| | Beispiel | | |
|---|---|---|---|
| | 12 | 13 | E |
| $CrO_5$-Menge (ppm) | 1 | 0,1 | — |
| Optische Durchlässigkeit (%) | 100 | 99 | 73 |

**0 027 607**

## Patentansprüche

1. Verfahren zur Herstellung einer gereinigten oxidationsbeständigen anorganischen Säure durch Oxidation der darin enthaltenen organischen Verunreinigungen mit Hilfe eines anorganischen Oxidationsmittels, dadurch gekennzeichnet, daß die Oxidation mit Hilfe von Wasserstoffperoxid in Gegenwart einer wasserlöslichen Vanadin-Verbindung oder Chrom-Verbindung in einer Menge von 0,1 bis 100 ppm (parts per million bezogen auf die Säuremenge) durchgeführt wird.

2. Verfahren nach Anspruch 1, dadurch gekennzeichnet, daß die Oxidation bei einer Temperatur von 20 bis 120° C durchgeführt wird.

3. Verfahren nach Anspruch 1, dadurch gekennzeichnet, daß als Vanadin-Verbindung Vanadin(V)-oxid verwendet wird.

4. Verfahren nach Anspruch 1, dadurch gekennzeichnet, daß als Chrom-Verbindung Chrom(VI)-oxid verwendet wird.

5. Verfahren nach Anspruch 1, dadurch gekennzeichnet, daß das Wasserstoffperoxid der Säure portionsweise in kleinen Anteilen zugefügt wird.

## Claims

1. Process for the manufacture of a purified, oxidationresistant, inorganic acid by oxidation of the organic impurities contained therein by means of an inorganic oxidant, characterised in that the oxidation is carried out by means of hydrogen peroxide in the presence of a water-soluble vanadium compound or chromium compound in an amount of from 0.1 to 100 ppm (relative to the amount of acid).

2. Process according to claim 1, characterised in that the oxidation is carried out at a temperature of from 20 to 120° C.

3. Process according to claim 1, characterised in that vanadium-(V) oxide is used as vanadium compound.

4. Process according to claim 1, characterised in that chromium-(VI) oxide is used as chromium compound.

5. Process according to claim 1, characterised in that the hydrogen peroxide is added portionwise in small amounts to the acid.

## Revendications

1. Procédé pour préparer un acide minéral résistant à l'oxydation, purifié, par oxydation des impuretés organiques contenues dans ledit acide au moyen d'un oxydant minéral, procédé caractérisé en ce qu'on effectue l'oxydation au moyen de peroxyde d'hydrogène en présence d'un composé du vanadium ou d'un composé du chrome soluble dans l'eau, en une quantité de 0,1 à 100 ppm (parties par million) par rapport à la quantité d'acide.

2. Procédé selon la revendication 1, caractérisé en ce qu'on effectue l'oxydation à une température de 20 à 120° C.

3. Procédé selon la revendication 1, caractérisé en ce qu'on utilise, comme composé du vanadium, de l'oxyde de vanadium(V).

4. Procédé selon la revendication 1, caractérisé en ce qu'on utilise, comme composé du chrome, de l'oxyde de chrome(VI).

5. Procédé selon la revendication 1, caractérisé en ce que le peroxyde d'hydrogène est ajouté par petites portions à l'acide.

5